# FASCICULE DE BREVET EUROPEEN

(11) **EP 2 853 440 B1**
(45) Date de publication et mention de la délivrance du brevet: **26.12.2018**
(21) Numéro de dépôt: 14185863.9
(22) Date de dépôt: 22.09.2014
(51) Int. Cl.: B60N 2/42, B60N 2/427

(54) **Structure de siège mobile verticalement**
Struktur eines vertikal beweglichen Sitzes
Vertically movable seat structure

(30) Priorité: 25.09.2013 FR 1302232
(43) Date de publication de la demande: 01.04.2015
(73) Titulaire: NEXTER Systems, 42328 Roanne (FR)
(72) Inventeur: Tanty, Fabien, 18023 Bourges (FR); Carrie, Sébastien, 18023 Bourges (FR); Lebaillif, David, 18023 Bourges (FR); Mallat, Didier, 18023 Bourges (FR)
(74) Mandataire: Cabinet Chaillot

(56) Documents cités:
- EP-A1- 1 719 701
- EP-A1- 2 113 457
- GB-A- 979 234
- US-A- 4 474 347
- US-A1- 2002 021 041
- US-A1- 2007 035 167
- US-A1- 2010 332 079
- US-A1- 2012 283 916

## Description

Le domaine technique de l'invention est celui des structures mobiles verticalement pour siège de véhicule militaire exposé à des chocs de type mines.

Les véhicules militaires susceptibles de subir des chocs de type mines sous leur plancher sont couramment équipés de dispositifs permettant un découplage entre la caisse du véhicule et le siège d'un passager lors d'une explosion de type mine. Ce type de siège ainsi équipé de tels dispositifs de découplage évite la transmission du choc au passager ou en limite le niveau d'énergie par l'absorption d'une partie de cette énergie de choc. Ces dispositifs peuvent équiper des sièges qui sont montés pivotants (ou coulissants) par rapport à la caisse pour permettre un réglage de la hauteur du siège ou un changement de position du passager, par exemple pour lui permettre d'avoir sa tête en dehors du véhicule.

L'inconvénient du découplage pour un siège monté pivotant ou coulissant par rapport à la caisse est que le siège se trouve alors libre d'osciller verticalement.

Une conséquence du choc est que le plancher du véhicule va dans un premier temps se rapprocher du siège du fait de la projection de la caisse vers le haut.

Dans un deuxième temps, la caisse redescend et le siège remonte relativement au plancher du véhicule (effet rebond).

Il y a alors un risque important que le passager vienne percuter violemment le plafond du véhicule ce qui peut occasionner des blessures graves pour le passager.

Le brevet WO2005113284 divulgue un siège de véhicule qui n'est pas un siège pivotant mais qui comporte une assise apte à se déchirer lors d'un choc vertical de bas en haut. Un tel siège ne permet pas de garder l'intégrité de l'assise qui joue un rôle important dans la non transmission des sollicitations violentes au passager.

Le brevet US2010/0332079 décrit un siège qui associe un élément de raideur permettant d'assurer le retour du siège en position et un moyen absorbeur d'énergie qui est piloté électroniquement par logiciel. Ce dispositif est complexe et n'est pas particulièrement adapté aux sièges devant protéger contre un choc dû à l'explosion d'une mine.

Le brevet US2007/0035167 décrit un siège qui est lié au véhicule, d'une part par un ressort à air qui limite les mouvements du siège vers le plancher, et d'autre part par des absorbeurs de chocs qui limitent les mouvements du siège vers le plafond. Cependant, il n'est pas prévu de libérer le siège et ce dispositif ne permet ainsi pas au siège de monter ou descendre librement suite à un choc.

Ainsi, l'invention a pour objet une structure de siège mobile verticalement pour véhicule militaire comportant un moyen de guidage vertical du mouvement du siège par rapport à une caisse du véhicule, moyen de guidage incorporant un moyen apte à libérer le mouvement vertical du siège consécutivement à un choc vertical d'un certain niveau, structure de siège caractérisée en ce qu'elle comporte un moyen de retenue du siège susceptible d'empêcher les mouvements ascendants brutaux de ce dernier.

Avantageusement, le moyen de guidage vertical comporte un bras solidaire du siège par sa première extrémité et solidaire de la caisse du véhicule par sa seconde extrémité au moyen d'une liaison pivot horizontale, liaison comportant un moyen de libération du pivotement du bras.

Avantageusement, le moyen de libération du pivotement comporte une goupille cisaillable.

Selon l'invention, le moyen de retenue comporte une sangle reliant le siège à une partie de la caisse située sous une assise du siège.

Selon l'invention, le moyen de retenue comporte un enrouleur situé sous le siège et apte à bobiner ou débobiner la sangle, enrouleur comportant un moyen de blocage de la sangle en cas de mouvement rapide de débobinage de celle-ci.

Avantageusement, le moyen de blocage comporte un dispositif centrifuge.

Selon l'invention, le moyen de retenue est formé par un lien souple non élastique solidarisable au siège par une première extrémité et solidaire de la caisse en un point situé en dessous d'une assise du siège.

Avantageusement, la première extrémité du lien peut être solidarisée en différents points du siège.

L'invention sera mieux comprise à la lecture de la description suivante, description faite en référence aux dessins annexés dans lesquels :
La figure 1 représente une vue de côté d'une structure de siège selon l'invention en position d'usage tête rentrée avant un choc.
La figure 2 représente une vue de coté de cette structure selon l'invention en position d'usage tête sortie avant un choc.
La figure 3 représente une vue de coté de la structure selon l'invention en position suite à un choc.
La figure 4 représente une vue de coté de la structure selon une variante de l'invention.

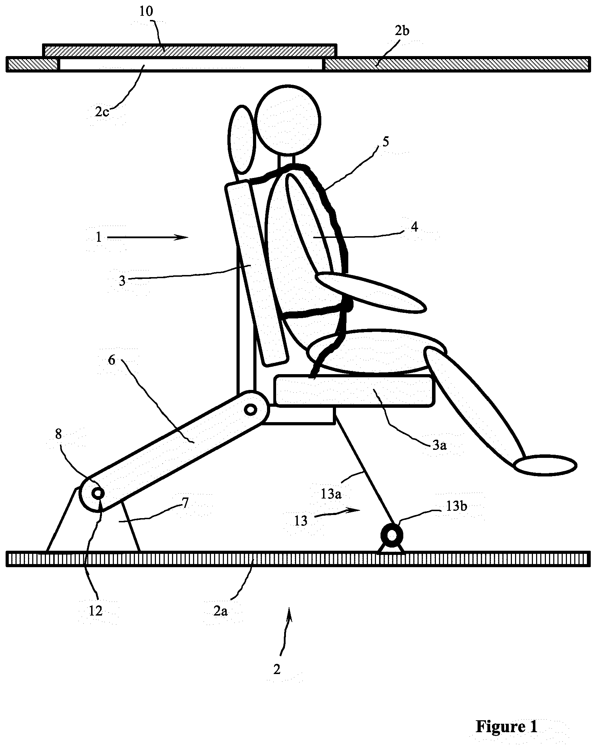

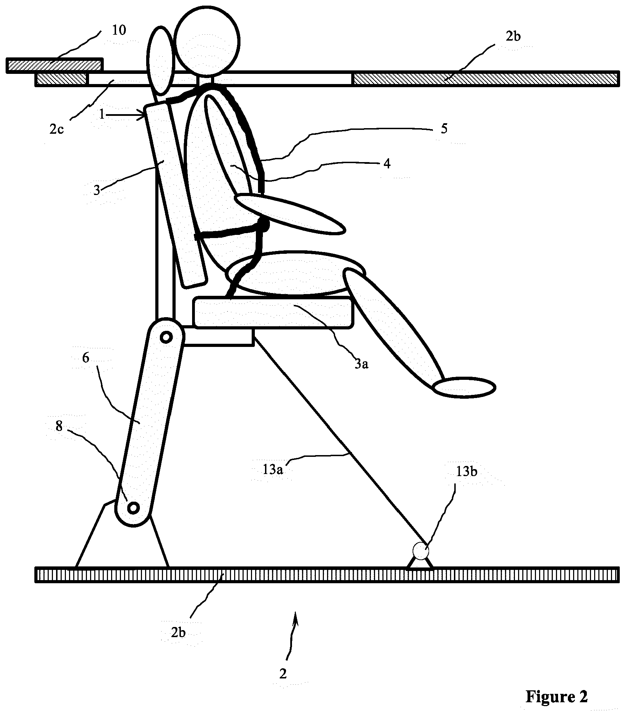

Selon les figures 1 et 2, la caisse 2 d'un véhicule militaire (véhicule non représenté) contient une structure 1 de siège pivotant selon l'invention.

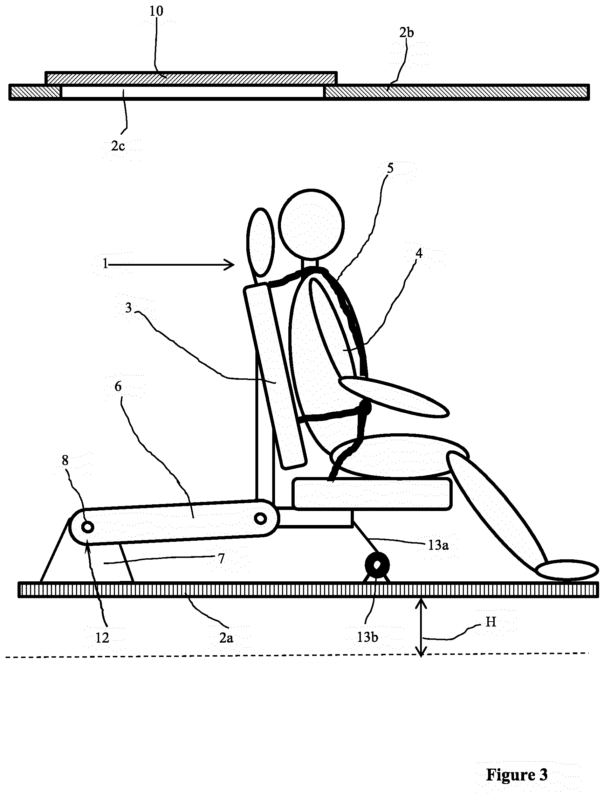

La structure 1 comporte un siège 3 sur lequel est assis un passager 4 qui est retenu sur le siège 3 au moyen d'un harnais 5. Le siège 3 est solidaire de la première extrémité d'un bras articulé 6 destiné à guider le mouvement vertical du siège 3 en cas de choc, comme visible à la figure 3, ou pour permettre la conduite tête sortie, comme à la figure 2.

Cette structure de siège 1 sur bras articulé 6 permet également de régler la distance entre siège 1 et toit 2b du véhicule en fonction de la stature du passager 4. Le positionnement vertical du siège 1 pourra être obtenu par d'autres moyens à la portée de l'Homme du Métier tels que décrits dans le brevet FR2916390.

La seconde extrémité du bras 6 est solidaire du plancher 2a du véhicule par un support 7 comportant une liaison pivot 8. Le support 7 et le bras articulé 6 forment ainsi un moyen de guidage vertical du siège 11. Le support 7 comporte un dispositif motorisé non représenté permettant d'élever le siège jusqu'à une position telle que le passager peut passer sa tête à travers un trou 2c du toit 2b de la caisse 2. Le trou 2c est obturable par une trappe 10.

On notera que, par exemple, un autre mode de réalisation de la structure de siège mobile verticalement, pourra consister en un dispositif de guidage par des rails suspendant verticalement le siège et permettant la montée et la descente de celui-ci.

Un moyen de retenue 13 solidaire du plancher 2a du véhicule est relié par une sangle 13a à l'assise 3a du siège 3. Ce moyen de retenue 13 comporte un enrouleur 13b apte à bobiner la sangle 13a au fur et à mesure de la remontée du plancher 2a en direction du siège 3. Le bobinage de la sangle 13a pourra être obtenu par un ressort entraînant l'enrouleur 13b. Le moyen de retenue 13 dispose d'un moyen de blocage non représenté apte à empêcher le débobinage de la sangle en cas de sollicitation rapide (vitesse de déroulement supérieure à 0.5 m/s) tendant à vouloir faire remonter le siège.

Un tel moyen de blocage pourra comporter un dispositif dont le blocage est provoqué par la force centrifuge générée par le déroulement de la sangle 13a. Ainsi le passager 4 est libre de régler la hauteur de son siège en actionnant le bras 6. Simultanément, l'enrouleur 13b déroule ou enroule la sangle 13a en fonction de la position souhaitée par le passager 4. Le moyen de retenue 13 a une structure analogue à celle des ceintures de sécurité utilisées dans le domaine automobile. Il sera cependant dimensionné en fonction des efforts liés à l'application considérée.

Selon la figure 3, le moyen de guidage 11 comporte un moyen de libération 12 du mouvement vertical du siège 3 consécutivement à un choc vertical. Ce moyen de libération 12 pourra comporter une goupille calibrée à la rupture par exemple qui sera cisaillée en cas de choc de mine sous le plancher au-delà d'un certain niveau prédéterminé par construction, mais qui sera apte à résister aux sollicitations de roulage classique du véhicule avec le siège en position levée ou abaissée.

La libération du mouvement vertical laisse le siège 3 libre de monter ou descendre en pivotant par rapport au support 7 grâce au bras 6. Ainsi, comme illustré à la figure 3, en cas de choc de mine sous le plancher 2a, la caisse 2 du véhicule va remonter d'une hauteur H et le siège 3 va descendre en direction du plancher 2a.

Lorsque par la suite (effet rebond) la caisse 2 du véhicule va redescendre, celle-ci va redescendre rapidement. De ce fait, l'enrouleur 13b va empêcher le déroulement de la sangle 13a. L'invention permet donc d'empêcher une remontée brutale du siège et donc le rebond du siège 3, évitant ainsi que le passager 4 percute le plafond 2b du véhicule.

On notera que, à la figure 2, le moyen de retenue 13 permet la remontée du siège 3 pour un usage de celui-ci en position tête sortie à partir du moment où la vitesse de remontée du siège est inférieure à un seuil déterminable par un réglage du moyen de blocage (vitesse de remontée choisie par exemple inférieure à 0.5 m/s pour me pas bloquer le déroulement de la sangle 13a).

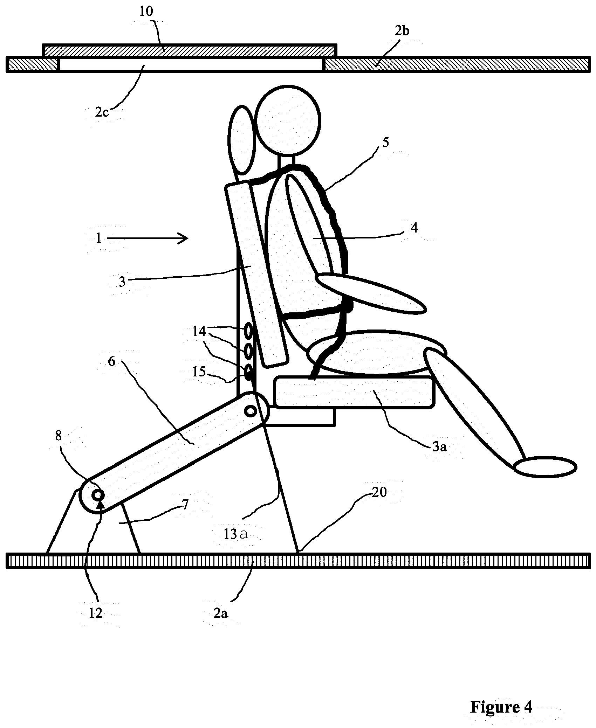

Selon un autre mode de réalisation illustré à la figure 4, la structure de siège 1 comporte un moyen de retenue 13 qui est formé par un lien souple, non élastique en traction, du type sangle, câble ou chaîne qui va assurer le rôle de moyen de retenue 13 du siège 3.

La première extrémité du lien est solidaire du siège 3 par un mousqueton 15 qui peut être accroché à différents oeillets 14 selon la hauteur à laquelle le passager veut situer son assise par rapport au toit 2a du véhicule. La seconde extrémité du lien est solidaire de la caisse en un point 20 situé en dessous de l'assise. L'usage d'un mousqueton 15 permet la conduite tête sortie en décrochant le mousqueton de l'oeillet retenant l'assise.

En cas de choc de mine, le siège 3 sera retenu contre toute remontée, relativement au plancher 2a, par le lien.

Comme cela a été indiqué précédemment, les moyens de l'invention peuvent être mis en oeuvre pour un siège qui est guidé verticalement sur des rails et non par un bras pivotant. Dans ce cas le moyen de libération (par exemple des goupilles cisaillables) permettra d'autoriser un coulissement libre du siège sur les rails et les moyens de retenue empêcheront les mouvements ascendants brutaux du siège vers le plafond du véhicule. Les moyens de retenue pourront être constitués (comme décrit précédemment) par une sangle associée à un enrouleur comportant un moyen de blocage ou bien par un simple lien de longueur fixe.

## Revendications

1. Structure de siège (1) mobile verticalement pour véhicule militaire comportant un moyen de guidage vertical (6) du mouvement du siège (3) par rapport à une caisse (2) du véhicule, moyen de guidage (6) incorporant un moyen de libération (12) apte à libérer le mouvement vertical du siège (3) consécutivement à un choc vertical d'un certain niveau, structure de siège (1) ***caractérisée en ce qu'***elle comporte un moyen de retenue (13) du siège (3) susceptible d'empêcher les mouvements ascendants brutaux de ce dernier, le moyen de retenue (13) comportant une sangle (13a) reliant le siège (3) à une partie de la caisse (2) située sous une assise (3a) du siège, le moyen de retenue (13) comportant un enrouleur (13b) situé sous le siège (3) et apte à bobiner ou débobiner la sangle (13a), enrouleur (13b) comportant un moyen de blocage de la sangle (13a) en cas de mouvement rapide de débobinage de celle-ci.

2. Structure de siège mobile (1) verticalement selon la revendication 1, **caractérisée en ce que** le moyen de blocage comporte un dispositif centrifuge.

3. Structure de siège (1) mobile verticalement pour véhicule militaire comportant un moyen de guidage vertical (6) du mouvement du siège (3) par rapport à une caisse (2) du véhicule, moyen de guidage (6) incorporant un moyen de libération (12) apte à libérer le mouvement vertical du siège (3) consécutivement à un choc vertical d'un certain niveau, structure de siège (1), ***caractérisée en ce qu'***elle comporte un moyen de retenue (13) du siège (3) susceptible d'empêcher les mouvements ascendants brutaux de ce dernier, le moyen de retenue (13) étant formé par un lien souple non élastique solidarisable au siège par une première extrémité (15) et solidaire de la caisse en un point (20) situé en dessous d'une assise du siège (3).

4. Structure de siège mobile (1) verticalement selon la revendication 3, **caractérisée en ce que** la première extrémité (15) du lien peut être solidarisée en différents points (14) du siège (3).

5. Structure de siège mobile (1) verticalement selon l'une des revendications 1 à 4, **caractérisée en ce que** le moyen de guidage (6) vertical comporte un bras (6) solidaire du siège (3) par sa première extrémité et solidaire de la caisse (2) du véhicule par sa seconde extrémité au moyen d'une liaison pivot (8) horizontale, liaison (8) comportant un moyen de libération du pivotement du bras.

6. Structure de siège (1) mobile verticalement selon la revendication 5, **caractérisée en ce que** le moyen de libération du pivotement (12) comporte une goupille cisaillable.

## Patentansprüche

1. Struktur eines vertikal beweglichen Sitzes (1) **für ein Militärfahrzeug, umfassend ein Mittel zur vertikalen Führung (6) der Bewegung** des Sitzes (3) mit Bezug auf einen Kasten (2) des Fahrzeugs, wobei das Mittel **zur Führung (6) ein Mittel zur** Freisetzung (12) einschließt, das ausgelegt ist, um die vertikale Bewegung des Sitzes (3) in der Folge eines vertikalen Zusammenstoßes auf einem bestimmten Niveau freizusetzen, wobei die Struktur des Sitzes (1) **dadurch gekennzeichnet ist, dass** sie eine Mittel zum **Rückhalt (13) des Sitzes (3) umfasst,** das die sehr starken aufsteigenden Bewegungen dieses Letzteren verhindern kann, **wobei das Rückhalt**emittel (13) einen Gurt (13a) umfasst, der den Sitz (3) mit einem Teil des Kastens (2) verbindet, der sich unter **einer Sitzfläche (3a) des Sitzes befindet,** wobei das **Rückhalt**emittel (13) eine Aufrollvorrichtung (13b) umfasst, die sich unter dem Sitz (3) befindet und ausgelegt ist, den Gurt (13a) auf- und abzuspulen, wobei die Aufrollvorrichtung (13b) ein Mittel zur **Blockierung des Gurts (13a) für den** Fall einer schnellen Abspulebewegung desselben umfasst.

2. Struktur eines vertikal beweglichen Sitzes (1) nach Anspruch 1, **dadurch gekennzeichnet, dass** das Mittel zur Blockierung eine Zentrifugalvorrichtung umfasst.

3. **Struktur eines vertikal beweglichen Sitzes (1) für ein Militärfahrzeug, umfassend ein Mittel zur vertikalen Führung (6) der Bewegung** des Sitzes (3) mit Bezug auf einen Kasten (2) des Fahrzeugs, wobei das Mittel **zur Führung (6) ein Mittel zur Freisetzung** (12) einschließt, das ausgelegt ist, um die vertikale Bewegung des Sitzes (3) in Folge eines vertikalen Zusammenstoßes auf einem bestimmten Niveau freizusetzen, wobei die Struktur des Sitzes (1) **dadurch gekennzeichnet ist, dass** sie ein Mittel zum **Rückhalt** (13) des Sitzes (3) umfasst, das die sehr starken aufsteigenden Bewegungen dieses Letzteren verhindern kann, **wobei das Rückhaltemittel (13)** durch eine flexible, nicht elastische Verbindung gebildet ist, die mit dem Sitz durch ein erstes Ende (15) fest verbunden werden kann und mit dem Kasten an einem Punkt (20) fest **verbunden ist, der sich unter einer Sitzfläche des Sitzes** (3) befindet.

4. Struktur eines vertikal beweglichen Sitzes (1) nach Anspruch 3, **dadurch gekennzeichnet, dass** das erste Ende (15) der Verbindung an verschiedenen Punkten (14) des Sitzes (3) fest verbunden sein kann.

5. Struktur eines vertikal beweglichen Sitzes (1) nach einem der **Ansprüche** 1 - 4, **dadurch gekennzeichnet, dass** das Mittel zur vertikalen **Führung (6) einen Arm (6) aufweist,** der durch sein erstes Ende fest mit dem Sitz (3) und durch sein zweites Ende fest mit dem Kasten (2) des Fahrzeugsmit mit Hilfe einer horizontalen Schwenkverbindung (8) verbunden ist, wobei die Verbindung (8) ein Mittel zum Freisetzen des Schwenkens des Arms umfasst.

6. Struktur eines vertikal beweglichen Sitzes (1) nach Anspruch 5, **dadurch gekennzeichnet, dass** das Mittel zur Freisetzung des Schwenkens (12) einen abschneidbaren Stift umfasst.

## Claims

1. A vertically movable seat structure (1) for military vehicle, comprising means (6) for vertically guiding the movement of the seat (3) with respect to a body (2) of the vehicle, the guiding means (6) incorporating a releasing means (12) capable of releasing the vertical movement of the seat (3) following a vertical impact of a certain level, the seat structure (1) being **characterised in that** it comprises a means (13) for holding the seat (3), which is likely to prevent the sudden upward movements of the latter, the holding means (13) comprising a strap (13a) connecting the seat (3) to a part of the body (2) that is located below a seating part (3a) of the seat, the holding means (13) comprising a reel (13b) located below the seat (3) and capable of winding or unwinding the strap (13a), the reel (13b) comprising means for blocking the strap (13a) in case of rapid unwinding movement thereof.

2. The vertically movable seat structure (1) according to claim 1, **characterised in that** the blocking means comprises a centrifugal device.

3. The vertically movable seat structure (1) for military vehicle, comprising means (6) for vertically guiding the movement of the seat (3) with respect to a body (2) of the vehicle, the guiding means (6) incorporating a releasing means (12) capable of releasing the vertical movement of the seat (3) following a vertical impact of a certain level, the seat structure (1) being **characterised in that** it comprises a means (13) for holding the seat (3), which is likely to prevent the sudden upward movements of the latter, the holding means (13) being formed by a non-elastic flexible link which can be made integral with the seat at a first end (15) and integral with the body at one point (20) located below a seating part of the seat (3).

4. The vertically movable seat structure (1) according to claim 3, **characterised in that** the first end (15) of the link can be made integral at different points (14) of the seat (3).

5. The vertically movable seat structure (1) according to one of claims 1-4, **characterised in that** the vertical guiding means (6) comprises an arm (6) integral with the seat (3) at its first end and integral with the body (2) of the vehicle at its second end using a horizontal pivot linkage (8), the linkage (8) comprising a means for releasing the pivoting of the arm.

6. The vertically movable seat structure (1) according to claim 5, **characterised in that** the pivot releasing means (12) comprises a shearable pin.
